# DEMANDE DE BREVET EUROPEEN

(11) **EP 1 916 157 A1**
(43) Date de publication de la demande: **30.04.2008**
(21) Numéro de dépôt: 07119317.1
(22) Date de dépôt: 25.10.2007
(51) Int. Cl.: B60R 13/04

(54) **Lot d'au moins deux éléments décoratifs et/ou protecteurs d'un panneau de carrosserie**

(30) Priorité: 25.10.2006 FR 0654536
(71) Demandeur: COMPAGNIE PLASTIC OMNIUM, 69007 Lyon (FR)
(72) Inventeur: Guyon, Sébastien, 01460 Montreal La Cluse (FR); Vilquin, Gilles, 69100 Villeurbanne (FR); Delavalle, Dominique, 01160 Pont D'Ain (FR); Marcos, William, 01640 L'Abergement De Varey (FR)
(74) Mandataire: Remy, Vincent Noel Paul

(57) **Abrégé**

L'invention concerne un lot d'au moins deux éléments (200, 200') décoratifs et/ou protecteurs d'un panneau de carrosserie comprenant chacun une partie support (202, 202') en matière plastique destinée à être fixée au panneau de carrosserie (228) et une partie d'aspect (206, 206') agencée pour masquer la partie support (202 , 202') lorsque cette dernière est fixée au panneau de carrosserie. Dans l'un des éléments (200), la partie d'aspect (206) comprend une feuille métallique (208) ayant une face externe (210) visible depuis l'extérieur du véhicule et une face interne (212) revêtue d'une couche de matière plastique (214, 214') surmoulée sur la feuille métallique et issue du moulage de la partie support. Dans l'autre élément (200'), la partie d'aspect (206') est intégralement en matière plastique. Les parties d'aspect (206, 206') des deux éléments ont la même face externe.

## Description

La présente invention concerne un élément décoratif et/ou de protection d'un panneau de carrosserie.

Un tel élément peut servir, par exemple, comme baguette de portière recouvrant le bord inférieur d'une portière d'un véhicule surélevé, notamment d'un véhicule tout terrain. Il peut s'agir également d'un bandeau de portière ou encore d'un bandeau de pare-chocs ou de tout autre élément que l'on fixe sur un panneau de carrosserie pour le protéger et/ou pour le décorer.

Les éléments décoratifs et/ou protecteurs sont quelquefois optionnels et peuvent varier dans leur aspect, en fonction du niveau d'équipement et du style du véhicule.

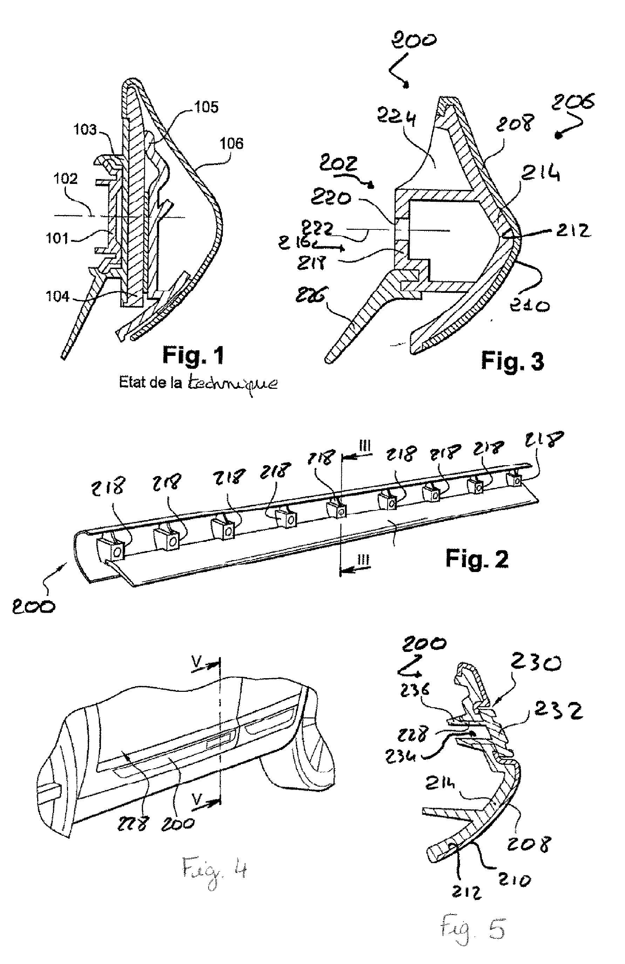

Un exemple de baguette de portière est fourni à la figure 1, sur laquelle on voit un rail de fixation 101 qui peut être vissé à demeure sur un panneau de portière, selon l'axe 102. Le rail de fixation 101 comporte des languettes latérales qui assurent la retenue par encliquetage d'un rail-support 103, lequel porte un bandeau 104, supportant lui-même un pied galbé 105. Les liaisons entre ces trois pièces sont assurées par collage, à l'aide de cordons de colle et d'adhésifs double face. Une cinquième pièce 106, constituée par une feuille d'aluminium de 1,5 mm d'épaisseur, forme une pièce d'aspect qui recouvre le bord supérieur du bandeau, suit un galbe prédéfini et rejoint le pied galbé. Cette feuille est collée au bandeau et au pied galbé.

Dans cet exemple de l'état de la technique, pas moins de quatre pièces en matière plastique sont nécessaires pour présenter la pièce d'aspect à la vue depuis l'extérieur du véhicule.

Même si ce nombre pourrait être réduit en fusionnant certaines pièces, sous réserve que l'on puisse toujours les mouler par injection de matière plastique, un problème qui se pose avec une telle baguette de portière est que sa conception est spécifiquement adaptée à la présence d'une feuille métallique rigide, ici une feuille d'aluminium de 1,5 mm d'épaisseur.

De ce fait, si le véhicule devait être proposé sous une version différente dans laquelle les baguettes de portière n'ont pas un aspect métallique mais par exemple peint ton caisse, teinté dans la masse ou autre, il faudrait peindre la feuille d'aluminium ou la remplacer par une autre pièce ayant le même galbe. II y aurait alors deux possibilités. Soit la pièce à peindre présente la même rigidité que la feuille métallique et, dans ce cas, les quatre pièces supports peuvent être réutilisées à l'identique, soit, et c'est l'hypothèse la plus probable, la pièce à peindre est moins rigide que la feuille métallique et la conception des pièces supports doit être revue, mais dans ce cas, deux versions de pièces supports devront être gérées lors de la fabrication des véhicules, ce qui n'est pas souhaitable.

La présente invention vise à proposer une solution à ce problème.

La présente invention a pour objet un lot d'au moins deux éléments décoratifs et/ou protecteurs d'un panneau de carrosserie, chaque élément comprenant une partie support en matière plastique destinée à être fixée au panneau de carrosserie et une partie d'aspect agencée pour masquer la partie support lorsque cette dernière est fixée au panneau de carrosserie, caractérisé en ce que, dans l'un des deux éléments, la partie d'aspect comprend une feuille métallique ayant une face externe visible depuis l'extérieur du véhicule et une face interne revêtue d'une couche de matière plastique surmoulée sur la feuille métallique et issue du moulage de la partie support tandis que, dans l'autre élément, la partie d'aspect est intégralement constituée par la matière plastique issue du moulage de la partie support, les parties d'aspect des deux éléments ayant des faces externes visibles depuis l'extérieur du véhicule qui sont géométriquement identiques.

Au sens de la présente invention, « géométriquement identiques » signifie « de même forme », c'est-à-dire ayant les mêmes contours et le même galbe.

L'invention répond au problème exposé ci-dessus grâce au fait que la feuille métallique, qui est doublée par une couche de matière plastique surmoulée, peut avoir une épaisseur très réduite. Cette épaisseur réduite ne lui permettrait d'ailleurs pas d'être utilisée comme seule pièce d'aspect car sa rigidité serait insuffisante. En revanche, la combinaison de la feuille métallique et de la couche en matière plastique surmoulée sur cette feuille métallique présente, elle, une rigidité suffisante pour assurer la fonction de pièce d'aspect.

Selon l'invention, pour réaliser un élément décoratif et/ou de protection ayant un aspect non pas métallique mais peint ou teinté dans la masse, il suffit d'omettre la feuille métallique. De ce fait, la matière plastique injectée lors du moulage de la partie support remplit l'espace laissé libre dans le moule par la feuille métallique manquante et forme ainsi, à elle seule, la pièce d'aspect. Du fait que la feuille métallique a une épaisseur réduite, la pièce d'aspect réalisée intégralement en matière plastique est réalisable dans des conditions normales d'injection et de refroidissement, sans occasionner de difficultés particulières, en particulier sans engendrer de retrait déformé.

Ainsi, grâce à l'invention, la réalisation d'un élément décoratif et/ou de protection présentant un aspect métallique ou non se gère de manière très simple, simplement en déposant ou non la feuille métallique dans le moule d'injection.

En outre, l'élément décoratif et/ou de protection selon l'invention est réalisable d'un seul tenant, ce qui évite d'avoir à gérer et assembler un grand nombre de pièces.

De plus, le fait que la feuille métallique puisse avoir une épaisseur très réduite permet d'alléger l'élément décoratif et/ou de protection obtenu.

Dans un mode de réalisation particulier de l'invention, la matière plastique est une matière thermoplastique. De préférence, cette matière plastique est un alliage ABS/PC chargé à 20 % de fibres de verre.

En l'absence de la feuille métallique, la matière thermoplastique utilisable pour injecter l'intégralité de l'élément selon l'invention est de préférence une matière à faible retrait et sans fibres telle qu'un mélange acrylonitrile-butadiène-styrène/polycarbonate (ABS/PC), ou polycarbonate/polybutylène téréphtalate (PC/PBT) ou du polypropylène avec 30 % de charge minérale au maximum, etc.

Dans un mode de réalisation particulier de l'invention, la partie d'aspect intègre un logement pour un dispositif lumineux, par exemple un répétiteur de clignotant et/ou des éléments réfléchissants de type catadioptres et/ou des capteurs, par exemple de distance pour l'aide au stationnement.

Dans un autre mode de réalisation de l'invention, compatible avec les précédents, la partie support comprend au moins un logement pour un insert décoratif portant par exemple un logo ou une dénomination.

Dans ces modes de réalisation, la feuille métallique a été ajourée au droit du logement préalablement à l'injection.

Dans un autre mode de réalisation, la feuille métallique présente un relief obtenu par emboutissage sous l'effet de la pression de la matière plastique injectée pendant son surmoulage.

Dans un mode de réalisation particulier de l'invention, la feuille métallique présente une épaisseur de 0,4 mm.

Elle peut être réalisée en inox brillant ou mat.

De préférence, on utilise une feuille métallique pré-enduite en usine d'une couche d'un matériau permettant la liaison avec la matière plastique formant la partie support. Ce matériau peut être, par exemple, une colle thermoréactive ou une matière plastique compatible avec la matière plastique formant le support.

En outre, la feuille métallique comporte de préférence, sur sa face externe, un film protecteur en thermoplastique, film qui peut demeurer sur la face externe de la feuille métallique pendant tout le processus de fabrication de l'élément décoratif et/ou protecteur ainsi que pendant le montage de ce dernier sur le véhicule, jusqu'à la livraison dudit véhicule à son client final.

A cet effet, on pourra utiliser le matériau commercialisé par la société Arcelor sous la référence Inoxflex.

Dans le but de mieux faire comprendre l'invention, on va maintenant en décrire des exemples de réalisation en référence aux dessins annexés dans lesquels :
- la figure 1, déjà citée, illustre l'état de la technique,
- la figure 2 est une vue en perspective, de l'intérieur, d'un premier élément décoratif et de protection appartenant à un lot de deux éléments décoratifs et de protection d'un panneau de carrosserie d'un véhiculeselon un premier mode de réalisation de l'invention,
- la figure 3 est une section selon III-III de la figure 2,
- la figure 4 est une vue en perspective, de l'extérieur, d'un premier élément décoratif et de protection appartenant à un lot de deux éléments décoratifs et de protection d'un panneau de carrosserie d'un véhiculeselon un second mode de réalisation de l'invention,
- la figure 5 est une section selon V-V de la baguette de la figure 4,
- la figure 6 est une vue analogue à la figure 3 d'un deuxième élément décoratif et de protection appartenant au lot de deux éléments selon le premier mode de réalisation de l'invention,
- la figure 7 est une vue analogue à la figure 5 d'un deuxième élément décoratif et de protection appartenant au lot de deux éléments selon le second mode de réalisation.

On a représenté sur les figures 2 et 3 un premier élément décoratif et de protection appartenant à un lot de deux éléments selon le premier mode de réalisation et désigné par la référence générale 200.

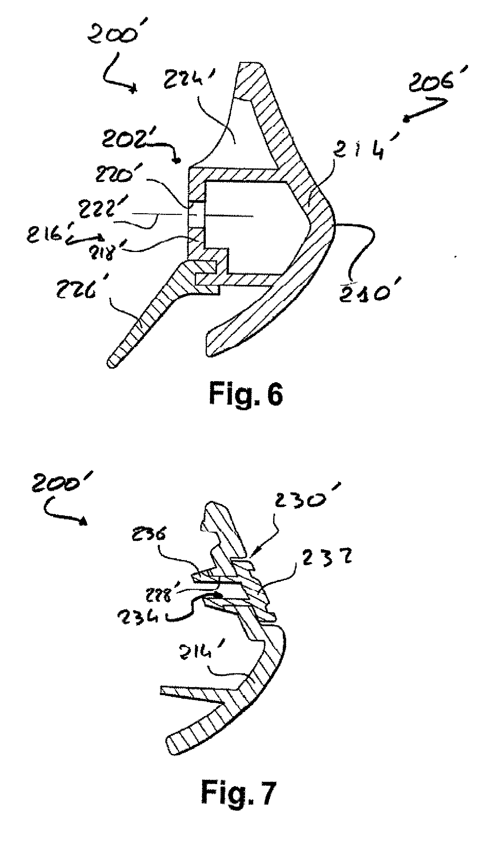

On a représenté sur la figure 6 un deuxième élément décoratif et de protection appartenant au lot de deux éléments selon le premier mode de réalisation et désigné par la référence générale 200'.

Comme représenté sur les figures 2, 3 et 6, chaque premier et deuxième élément décoratif 200, 200' forme une baguette de portière.

En référence aux figures 2 et 3, le premier élément 200 comprend une partie support 202 en matière plastique destinée à être fixée à un panneau de carrosserie, en l'espèce une portière. Ici, la matière plastique est une matière thermoplastique, par exemple un ABS/PC chargé à 20 % de fibres de verre.

Le premier élément 200 comprend également une partie d'aspect 206, agencée pour masquer la partie support 202 lorsque celle-ci est fixée au panneau de carrosserie 204.

La partie d'aspect 206 comprend une feuille métallique 208 ayant une face visible 210 depuis l'extérieur du véhicule et une face interne 212. Dans l'exemple, la feuille métallique 208 est réalisée en inox brillant ou mat et présente une épaisseur de 0,4 mm.

Sur ces mêmes figures 2 et 3, la partie d'aspect 206 comprend une couche 214 en matière plastique revêtant la face interne 212 de la feuille métallique 208 et surmoulée sur celle-ci. Cette couche 214 a une fonction esthétique sans être visible depuis l'extérieur du véhicule car elle permet de donner sa forme à la feuille métallique 208, notamment son galbe.

La partie support 202 comprend des moyens de fixation 216 du premier élément 200 au panneau de carrosserie 204. En l'espèce, ces moyens de fixations 216 comprennent neuf boîtiers 218 répartis le long de la baguette 200. Chaque boîtier 218 comprend un orifice 220 de passage d'un clou de fixation présentant un axe 222.

Le premier élément 200 comprend une nervure de rigidification 224 reliant la couche 214 et chacun des boîtiers 218 ainsi qu'une lèvre anti-projection 226.

En référence à la figure 6, le deuxième élément décoratif et de protection 200' du lot selon le premier mode de réalisation comprend une partie d'aspect 206' intégralement constituée par la matière plastique issue du moulage d'une partie support 202' identique à la partie 202 de la partie support du premier élément 200. La partie d'aspect 206' est formée par une couche 214' d'épaisseur différente de la couche 214 de la partie d'aspect 206 du premier élément.

En l'espèce, la couche 214 de matière plastique surmoulée du premier élément présente une épaisseur de 2,5 mm. Ajoutée à l'épaisseur de la feuille métallique 208 de 0,4 mm, la partie d'aspect 206 du premier élément a une épaisseur totale de 2,9 mm. La partie d'aspect 206' du deuxième élément comprend la couche 214' qui présente une épaisseur totale de 2, 9 mm. Cette épaisseur, inférieure à 3 mm, rend la partie d'aspect 206' réalisable intégralement en matière plastique en utilisant le même outillage pour une version "tout plastique" (c'est-à-dire sans feuille métallique) que pour la version intégrant une feuille métallique.

Le second élément 200' comprend des nervures 224' et lèvres 226' identiques aux nervures 224 et lèvres 226 du premier élément 200. La partie support 202' est identique à la partie support 202 et comprend notamment des moyens de fixation 216', des boîtiers 218', des orifices 220', un axe 222' sensiblement identiques à ceux de la partie support 202 du premier élément 200.

Les faces externes 210, 210' visibles depuis l'extérieur du véhicule des parties d'aspect 206 et 206' des premier et deuxième éléments sont géométriquement identiques.

La feuille 208 est pré-enduite en usine d'un matériau permettant la liaison avec la matière plastique formant la partie support 202 lors de la fabrication du premier élément 200.

Avant le surmoulage de la matière plastique de la partie support 202 sur la feuille 208, la feuille métallique comporte, sur sa face externe, un film protecteur en thermoplastique.

On a représenté sur les figures 4 et 5 un premier élément décoratif et de protection appartenant à un lot de deux éléments selon le second mode de réalisation.

On a représenté sur la figure 7 un deuxième élément décoratif et de protection appartenant au lot de deux éléments selon le second mode de réalisation.

Sur les figures 4, 5 et 7, les éléments identiques à ceux représentés sur les figures 2,3 et 6 sont désignés par des références identiques.

En référence à la figure 4, la baguette 200 est fixée sur un bas de portière 228.

A la différence du premier mode de réalisation et comme représenté sur les figures 4 et 5, la partie support 202 du premier élément 200 comprend un logement 230 pour un insert décoratif 232 portant par exemple un logo ou une dénomination. En référence à la figure 7, la partie support 202' du deuxième élément 200' comprend également un logement 230' identique au logement 230 du premier élément.

En variante, chaque logement 230, 230' pourrait être destiné à recevoir un dispositif lumineux, par exemple un répétiteur de clignotant et/ou des éléments réfléchissants de type catadioptres et/ou des capteurs par exemple de distance pour l'aide au stationnement.

Afin de pouvoir loger l'insert 232, la feuille métallique 208 a été ajourée préalablement à l'injection au droit du logement 230.

Chaque logement 230, 230' des premier et deuxième éléments comporte un orifice 234, 234' d'encliquetage de l'insert destiné à recevoir des pattes d'encliquetage 236 de l'insert 232.

Il est bien entendu que les modes de réalisation qui viennent d'être décrits ne présentent aucun caractère limitatif.

En effet, la feuille du premier élément pourra présenter un relief obtenu par emboutissage sous l'effet de la pression de la matière plastique injectée pendant son surmoulage. Ce relief pourra être obtenu sur le deuxième élément par moulage de la matière plastique dans le même moule que celui utilisé pour la fabrication du premier élément.

## Revendications

1. Lot d'au moins deux éléments (200, 200') décoratifs et/ou protecteurs d'un panneau de carrosserie, chaque élément comprenant une partie support (202, 202') en matière plastique destinée à être fixée au panneau de carrosserie (228) et une partie d'aspect (206, 206') agencée pour masquer la partie support lorsque cette dernière est fixée au panneau de carrosserie, **caractérisé en ce que**, dans l'un des deux éléments (200), la partie d'aspect (206) comprend une feuille métallique (208) ayant une face externe (210) visible depuis l'extérieur du véhicule et une face interne (212) revêtue d'une couche de matière plastique (214, 214') surmoulée sur la feuille métallique (208) et issue du moulage de la partie support tandis que, dans l'autre élément (200'), la partie d'aspect (206') est intégralement constituée par la matière plastique issue du moulage de la partie support (202'), les parties d'aspect (206, 206') des deux éléments ayant des faces externes visibles (210, 210') depuis l'extérieur du véhicule qui sont géométriquement identiques.

2. Lot selon la revendication 1, dans lequel la matière plastique est une matière thermoplastique.

3. Lot selon la revendication 2, dans lequel la matière plastique est un ABS/PC chargé à 20 % de fibres de verre.

4. Lot selon l'une des revendications 1 à 3, dans lequel la partie d'aspect d'au moins un élément intègre un logement (230, 230') pour un dispositif lumineux, par exemple un répétiteur de clignotant et/ou des éléments réfléchissants de type catadioptres et/ou des capteurs par exemple de distance pour l'aide au stationnement.

5. Lot selon l'une des revendications 1 à 4, dans lequel la partie support d'au moins un élément comprend au moins un logement (230, 230') pour un insert décoratif (232) portant par exemple un logo ou une dénomination.

6. Lot selon l'une des revendications 4 et 5, dans lequel la feuille métallique (208) a été ajourée préalablement à l'injection au droit du logement (230, 230').

7. Lot selon l'une des revendications 1 à 6, dans lequel la feuille métallique (208) présente un relief obtenu par emboutissage sous l'effet de la pression de la matière plastique injectée pendant son surmoulage

8. Lot selon l'une des revendications 1 à 7, dans lequel la feuille métallique (208) présente une épaisseur de 0,4 mm.

9. Lot selon l'une des revendications 1 à 8, dans lequel la feuille métallique (208) est réalisée en inox brillant ou mat.

10. Lot selon l'une des revendications 1 à 9, dans lequel la feuille métallique (208) est pré-enduite en usine d'un matériau permettant la liaison avec la matière plastique formant la partie support.

11. Lot selon l'une des revendications 1 à 10, dans lequel la feuille métallique (208) comporte, sur sa face externe, un film protecteur en thermoplastique.
